# EUROPEAN PATENT SPECIFICATION

(11) **EP 4 356 869 B1**
(45) Date of publication and mention of the grant of the patent: **10.09.2025**
(21) Application number: 22383001.9
(22) Date of filing: 19.10.2022
(51) Int. Cl.: A61C 8/00

(54) **DENTAL IMPLANT**
ZAHNIMPLANTAT
IMPLANT DENTAIRE

(43) Date of publication of application: 24.04.2024
(73) Proprietor: Gamborena Querejeta, José Ignacio, 20018 San Sebastián (Guipúzcua) (ES); Pi Urgell, Joan, AD700 Escaldes-Engordany (AD)
(72) Inventor: Gamborena Querejeta, José Ignacio, 20018 San Sebastián (Guipúzcua) (ES); Pi Urgell, Joan, AD700 Escaldes-Engordany (AD)
(74) Representative: Carbonell Callicó, Josep

(56) References cited:
- WO-A1-2015/118543
- DE-U1- 202009 000 560
- US-A1- 2017 354 485

## Description

### Technical field.

The present invention is applicable in the field of dental implantology.

### Prior art.

Currently different types of dental implants are known which generally comprise an externally threaded body intended for being inserted and fixed in a hole made in the patient's bone and a threaded head.

The body of the implants generally has a conical shape or a cylindrical shape, with the corresponding external thread, which causes the implant to generate excessive pressure in the area of the pre-implant crestal bone during its placement, and a remodeling of the crestal bone, adjacent to the implant, thus also affecting the volume of and the aesthetics thereof.

Therefore, the technical problem considered is the development of a dental implant that allows: reducing the pressure applied to the area of the crestal bone both during the placement of the implant in a hole made in the patient's bone, and after placement of the implant; performing a packing of filling materials in an area between the head and the implant body in order to increase its bone stability and durability and a better behaviour of the surrounding tissue; and having a higher quality and quantity of bone around the implant.

The applicant for the invention is unaware of the existence of a history of implants that allow satisfactorily solving the aforementioned problems.

US2017354485 discloses a dental implant comprising a body having an upper portion, a middle portion, and a lower portion, the upper portion of the body including a generally cylindrical region, the lower portion of the body including a generally inwardly tapered region, and the middle portion of the body including an outwardly extending bulge, a maximum outer diameter of the bulge being greater than (i) a maximum outer diameter of the upper portion and (ii) a maximum outer diameter of the lower portion; and
a threaded surface on the body within at least a portion of the upper portion of the body, the bulge, and the lower portion of the body.

### Description of the invention

The implant of the invention is of the type mentioned in the pre-characterising part of the independent claim, comprising: a cylindrical head with several threads; and extending in the apical direction in a body provided with a helical thread.

According to the invention, the threaded head has a smaller diameter than the external thread of the implant body, the change in diameter between the threaded head and the rest of the implant defining an implant stress reduction chamber at the level of the crestal bone, between the implant and the implant osteotomy.

The head has a perimeter channel at its coronal end to prevent long-term bone retraction, a finishing bevel and an internal conical connection.

In turn, the implant body comprises, in the coronal or apical direction, several threaded sections, with a variable profile and diameter, having at least one helical groove with a larger pitch that defines sharp scoring in said sections.

Specifically, the body comprises in the apical direction: a first conical section with a diameter that increases in the apical direction, a second straight cylindrical section that defines the area with the largest diameter of the implant; a third conical section with a diameter that decreases in the apical direction provided with progressive sharp scoring in the coronal direction and ending in a tip for guiding the implant during its placement in the event of making a hole in the bone before said placement; wherein the diameter of the cylindrical head is between 10% and 50% smaller than the largest diameter of the implant, defined by the second section (5).

In the third section, the threads have a sharp edge and a diameter that increases from the apical end to the second cylindrical section of the implant body, the thickness of the threads increasing in a coronal direction to condense and compress the patient's bone during implant placement.

The head of the implant has a length comprised between 1/5 and 1/2 of the total length of the implant, and between 2 and 6 threads, with a trapezoidal profile smaller than the thread profile of the first, second and third sections of the implant body.

The helical groove or grooves that the threads of the implant body have create chimneys with sharp scoring which, together with the increase in the thickness of the thread in the coronal direction, performing a packing of the bone, directing it towards the coronal part.

In this way, the threads of the implant body act as bone condensers, favouring final implant stability, cutting and condensing said bone.

The features of this implant differ considerably from standard implants on the market, whether they are entirely cylindrical or mostly conical.

The design of the threads and the specific variations in width and diameter of said threads in successive sections of the body provide greater stability where it is most needed, which is the second section of the implant body, generating great primary stability in the placement of the implant due to its larger diameter with sharp scoring in the apical area of the body and less sharp, square-edged scoring in the first section of the body for greater condensing and compression of the bone.

The special design of the tip of the implant and its progressive continuity with the implant body, as well as the cutting profile of the threads, confer upon it a property distinguishing it from the rest of implant systems, which is the ability to self-drill the bone bed, avoiding the previous preparation by milling the bone, maintaining the integrity of the bone; this characteristic confers upon it better initial stability as well as the reduction of the temperature or overheating of the bone bed as there is no milling, avoiding cell necrosis and, therefore, being a better and faster bone repair.

The design of the implant body allows great versatility when it comes to placement, displacing and expelling the bone through chimneys or helical cuts apicocoronally and thus providing great self-tapping power.

There are numerous other advantages of the implant derived from having an implant with a smaller diameter in the coronal part, which are essential for bone and tissue stability, namely:
- This change in diameter creates an implant stress reduction chamber at the level of the crestal bone, between the implant and the implant osteotomy, thus avoiding further stress on the peri-implant crestal bone and directing it to a more coronal or apical position around a central third of the length of the implant body, which acts on an area where there is a greater volume of bone, improving the distribution of all the stress in the implant.
- It is a paradigm shift, since in traditional implants the excessive pressure produced in the crestal bone produces a remodeling of the crestal bone adjacent to a conventional implant, thus also affecting the volume of the tissue and the aesthetics thereof.
- The bone chamber defined between the implant and the initial osteotomy can be improved with the packing of filler materials to increase its bone stability and durability, thus also improving the behaviour of the surrounding tissue.
- The effect of this chamber is improved by all the bone being regurgitated coronally during the osteotomy by the helical cuts in the implant body producing and helping to create an ideal situation to be improved and compacted with filler materials that improve the integrity and quality of the bone surrounding the implant.
- Having a close connection and a higher quality and quantity of bone around the implant improves the quality and stability of the tissue, generating a denser and more fibrous tissue.

Whether working on soft bone, post-extraction sockets or alveolar ridges, it is an ideal option for compromised protocols and indications, such as immediate implant placement and immediate function.

In order to achieve optimal operating conditions for the implant, the thread of the head, the perimeter channel, the taper of the first section of the body and the tip of the implant are intended to preferably have certain dimensional characteristics, comprised between predetermined values.

Preferably and according to the invention, the mentioned dimensional characteristics are:
- the depth of the thread of the cylindrical head is between 0.1 and 0.6 millimeters;
- the perimeter channel has a radius comprised between 0.1 and 0.5 mm;
- the first section with a diameter that increases in the apical direction has a taper comprised between 0.5 and 10 degrees; and
- the tip (7) has a diameter comprised between 1 and 3 millimeters.

### Brief description of the content of the drawings.

As a complement to the present description, and for the purpose of helping to make the features of the invention described in the attached claims more readily understandable, said description is accompanied by a set of drawings which, by way of illustration and not limitation, represent the following:
- Figures 1 and 2 show respective views of an embodiment of the dental implant according to the invention.
- Figure 3 shows a perspective view of the dental implant of the previous figures.

### Detailed description of embodiments of the invention.

The dental implant shown in the attached figures comprises from its coronal end to its apical end: a bevel (1), a perimeter channel (2) to prevent long-term bone retraction; a cylindrical head (3) with several threads (31) which extends in the apical direction in a body with several threaded sections (4, 5, 6), with a variable profile and diameter, having helical chimneys or grooves (9) with a larger pitch than the threads and defining sharp scoring in said sections, said body ending in a tip (7).

The helical grooves (9), with a bottom with a spherical geometry, define inclined cuts (10, 12) at the tip (7) and in the profile of the threads of the threaded sections (4, 5, 6).

The ridges distributed in the first, second and third sections (4, 5, 6) comprise cutouts (8) on one or more sides of the implant.

Specifically, the implant body comprises: a first conical section (4) with a diameter that increases in the apical direction, a second straight cylindrical section (5) that defines the area with the largest diameter of the implant; a third conical section (6) with a diameter that decreases in the apical direction provided with progressive sharp scoring in the coronal direction.

In order to obtain optimal operating and bone compression and integration conditions, in a preferred embodiment, this dental implant has certain dimensions, which are detailed below.

Said first section has a taper comprised between 0.5 and 10 degrees,

The tip (7) has a diameter comprised between 1 and 3 mm for guiding the implant

The head (3) has between 2 and 6 threads with a trapezoidal profile, smaller than the threads of the first, second and third zones (4, 5, 6) of the implant body and a thread depth comprised between 0.1 and 0.6 mm, the change in diameter between the threaded head (3) and the rest of the implant defining an implant stress reduction zone at the level of the crestal bone, between the implant and the implant osteotomy.

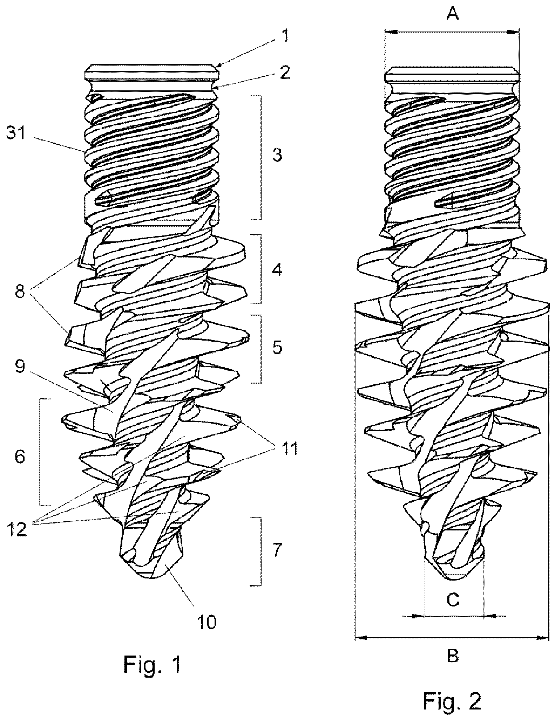

Said head (3) has a length (I) comprised between 1/5 and 1/2 of the total length (L) of the implant and a diameter (A), referenced in figure 2, which is between 10% and 50% smaller than the largest diameter (B) of the implant defined by the second section (5).

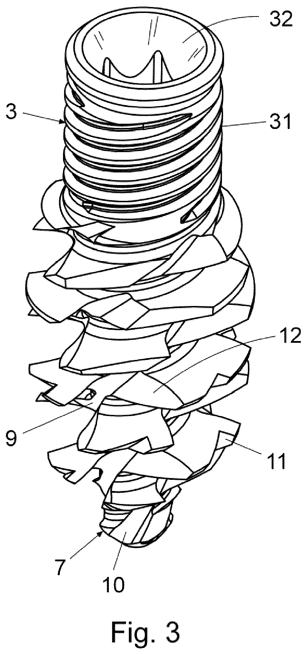

As can be seen in figure 3, the head (3) has an internal conical connection (32).

The perimeter channel (2) defined at the end of the thread of the head has a radius comprised between 0.1 and 0.5 mm.

In the embodiment shown, the ridges defined by the threads of the first, second and third sections (4, 5 and 6) also comprise notches or cuts (11).

Having sufficiently described the nature of the invention, in addition to an example of preferred embodiment, it is hereby stated for the relevant purposes that the materials, shape, size and layout of the described elements may be modified, provided that it does not imply altering the essential features of the invention claimed below.

## Claims

1. Dental implant, comprising a cylindrical head (3) with several threads (31); said cylindrical head extending in the apical direction in a body provided with a helical thread; wherein the implant body comprises, in the apical direction, several threaded sections (4, 5, and 6), with a variable profile and diameter, having at least one helical groove (9) with a larger pitch that defines sharp scoring in said sections; said threaded sections comprising in the apical direction: a first conical section (4) with a diameter that increases in the apical direction, a second straight cylindrical section (5) that defines the area with the largest diameter (B) of the implant; a third conical section (6) with a diameter that decreases in the apical direction provided with progressive sharp scoring in the coronal direction and ending in a tip (7) for guiding the implant during its placement in the event of making a hole in the bone before said placement; wherein the diameter (A) of the cylindrical head (3) is between 10% and 50% smaller than the largest diameter (B) of the implant defined by the second section (5).

2. Dental implant according to claim 1, **characterised in that** the cylindrical head (3) has a length (I) comprised between 1/5 and 1/2 of the total length (L) of the implant.

3. Dental implant according to any one of the preceding claims; **characterised in that** the head (3) has a perimeter channel (2) at its coronal end to prevent long-term bone retraction, a finishing bevel (1) and an internal conical connection (32).

4. Dental implant according to any of the preceding claims, **characterised in that** the head (3) has between 2 and 6 threads (31), with a smaller trapezoidal profile than the thread profile of the first, second and third sections (4, 5, 6).

5. Dental implant according to any one of the preceding claims, **characterised in that** the depth of the thread (31) of the cylindrical head (3) is between 0.1 and 0.6 millimeters

6. Dental implant according to any one of the preceding claims, **characterised in that** the perimeter channel (2) has a radius comprised between 0.1 and 0.5 mm.

7. Dental implant according to any one of the preceding claims, **characterised in that** the first section (4) with a diameter that increases in the apical direction has a taper between 0.5 and 10 degrees.

8. Dental implant according to any one of the preceding claims, **characterised in that** part or all of ridges distributed in the first, second and third sections (4, 5, 6) comprise cutouts (8) on one or more sides of the implant.

9. Dental implant according to any one of the preceding claims, **characterised in that** ridges defined by the threads of the first, second and third sections (4, 5 and 6) comprise notches or cuts (11).

10. Dental implant according to any one of the preceding claims, **characterised in that** the helical grooves (9) have a bottom with a spherical geometry and define inclined cuts (10, 12) at the tip (7) and in the profile of the threads of the threaded sections (4, 5, 6), respectively.

11. Dental implant according to any one of the preceding claims, **characterised in that** the tip (7) has a diameter comprised between 1 and 3 millimeters

## Patentansprüche

1. Zahnimplantat, umfassend einen zylindrischen Kopf (3) mit mehreren Gewinden (31); wobei sich der zylindrische Kopf in apikaler Richtung in einem Körper erstreckt, der mit einem schraubenförmigen Gewinde versehen ist; wobei der Implantatkörper in apikaler Richtung mehrere Gewindeabschnitte (4, 5 und 6) mit variablem Profil und Durchmesser umfasst, die mindestens eine schraubenförmige Nut (9) mit einer größeren Steigung aufweisen, die in den Abschnitten scharfe Einkerbungen definiert; wobei die Gewindeabschnitte in apikaler Richtung Folgendes umfassen: einen ersten konischen Abschnitt (4) mit einem Durchmesser, der in apikaler Richtung zunimmt, einen zweiten geraden zylindrischen Abschnitt (5), der den Bereich mit dem größten Durchmesser (B) des Implantats definiert; einen dritten konischen Abschnitt (6) mit einem Durchmesser, der in apikaler Richtung abnimmt, der mit progressiven scharfen Einkerbungen in koronaler Richtung versehen ist und in einer Spitze (7) endet, um das Implantat während seiner Platzierung zu führen, falls vor der Platzierung ein Loch in den Knochen eingebracht wird; wobei der Durchmesser (A) des zylindrischen Kopfes (3) zwischen 10 % und 50 % kleiner ist als der größte Durchmesser (B) des Implantats, der durch den zweiten Abschnitt (5) definiert ist.

2. Zahnimplantat nach Anspruch 1, **dadurch gekennzeichnet, dass** der zylindrische Kopf (3) eine Länge (I) aufweist, die zwischen 1/5 und 1/2 der Gesamtlänge (L) des Implantats umfasst ist.

3. Zahnimplantat nach einem der vorhergehenden Ansprüche; **dadurch gekennzeichnet, dass** der Kopf (3) an seinem koronalen Ende einen Umfangskanal (2) zur Verhinderung einer langfristigen Knochenretraktion, eine Abschlussfase (1) und eine innere konische Verbindung (32) aufweist.

4. Zahnimplantat nach einem der vorhergehenden Ansprüche, **dadurch gekennzeichnet, dass** der Kopf (3) zwischen 2 und 6 Gewinde (31) mit einem kleineren Trapezprofil als das Gewindeprofil des ersten, zweiten und dritten Abschnitts (4, 5, 6) aufweist.

5. Zahnimplantat nach einem der vorhergehenden Ansprüche, **dadurch gekennzeichnet, dass** die Tiefe des Gewindes (31) des zylindrischen Kopfes (3) zwischen 0,1 und 0,6 Millimeter beträgt.

6. Zahnimplantat nach einem der vorhergehenden Ansprüche, **dadurch gekennzeichnet, dass** der Umfangskanal (2) einen Radius aufweist, der zwischen 0,1 und 0,5 mm umfasst ist.

7. Zahnimplantat nach einem der vorhergehenden Ansprüche, **dadurch gekennzeichnet, dass** der erste Abschnitt (4) mit einem Durchmesser, der in apikaler Richtung zunimmt, eine Verjüngung zwischen 0,5 und 10 Grad aufweist.

8. Zahnimplantat nach einem der vorhergehenden Ansprüche, **dadurch gekennzeichnet, dass** die im ersten, zweiten und dritten Abschnitt (4, 5, 6) verteilten Rippen teilweise oder vollständig Aussparungen (8) an einer oder mehreren Seiten des Implantats umfassen.

9. Zahnimplantat nach einem der vorhergehenden Ansprüche, **dadurch gekennzeichnet, dass** die durch die Gewinde des ersten, zweiten und dritten Abschnitts (4, 5 und 6) definierten Rippen Kerben oder Einschnitte (11) umfassen.

10. Zahnimplantat nach einem der vorhergehenden Ansprüche, **dadurch gekennzeichnet, dass** die schraubenförmigen Nuten (9) einen Boden mit einer sphärischen Geometrie aufweisen und geneigte Einschnitte (10, 12) jeweils an der Spitze (7) und im Profil der Gewinde der Gewindeabschnitte (4, 5, 6) definieren.

11. Zahnimplantat nach einem der vorhergehenden Ansprüche, **dadurch gekennzeichnet, dass** die Spitze (7) einen Durchmesser aufweist, der zwischen 1 und 3 Millimetern umfasst ist.

## Revendications

1. Implant dentaire, comprenant une tête cylindrique (3) avec plusieurs filets (31) ; ladite tête cylindrique s'étendant dans la direction apicale dans un corps pourvu d'un filet hélicoïdal ; dans lequel le corps de l'implant comprend, dans la direction apicale, plusieurs sections filetées (4, 5 et 6), avec un profil et un diamètre variables, ayant au moins une rainure hélicoïdale (9) avec un pas plus grand qui définit un entaillage tranchant dans lesdites sections ; lesdites sections filetées comprenant dans la direction apicale : une première section conique (4) avec un diamètre qui augmente dans la direction apicale, une deuxième section cylindrique droite (5) qui définit la zone avec le plus grand diamètre (B) de l'implant ; une troisième section conique (6) avec un diamètre qui diminue dans la direction apicale, pourvue d'un entaillage tranchant progressif dans la direction coronale et se terminant dans une pointe (7) pour guider l'implant pendant sa mise en place dans le cas où un trou est pratiqué dans l'os avant ladite mise en place ; dans lequel le diamètre (A) de la tête cylindrique (3) est entre 10 % et 50 % plus petit que le plus grand diamètre (B) de l'implant défini par la deuxième section (5).

2. Implant dentaire selon la revendication 1, **caractérisé en ce que** la tête cylindrique (3) a une longueur (I) comprise entre 1/5 et 1/2 de la longueur totale (L) de l'implant.

3. Implant dentaire selon l'une quelconque des revendications précédentes ; **caractérisé en ce que** la tête (3) a un canal périphérique (2) au niveau de son extrémité coronale pour empêcher une rétraction osseuse à long terme, un biseau de finition (1) et une liaison conique interne (32).

4. Implant dentaire selon l'une quelconque des revendications précédentes, **caractérisé en ce que** la tête (3) a entre 2 et 6 filets (31), avec un profil trapézoïdal plus petit que le profil de filet des première, deuxième et troisième sections (4, 5, 6).

5. Implant dentaire selon l'une quelconque des revendications précédentes, **caractérisé en ce que** la profondeur du filet (31) de la tête cylindrique (3) est entre 0,1 et 0,6 millimètres.

6. Implant dentaire selon l'une quelconque des revendications précédentes, **caractérisé en ce que** le canal périphérique (2) a un rayon compris entre 0,1 et 0,5 mm.

7. Implant dentaire selon l'une quelconque des revendications précédentes, **caractérisé en ce que** la première section (4) avec un diamètre qui augmente dans la direction apicale a une conicité entre 0,5 et 10 degrés.

8. Implant dentaire selon l'une quelconque des revendications précédentes, **caractérisé en ce qu'**une partie ou la totalité des crêtes distribuées dans les première, deuxième et troisième sections (4, 5, 6) comprennent des découpes (8) sur un ou plusieurs côtés de l'implant.

9. Implant dentaire selon l'une quelconque des revendications précédentes, **caractérisé en ce que** des crêtes définies par les filets des première, deuxième et troisième sections (4, 5 et 6) comprennent des encoches ou des coupes (11).

10. Implant dentaire selon l'une quelconque des revendications précédentes, **caractérisé en ce que** les rainures hélicoïdales (9) ont un fond avec une géométrie sphérique et définissent des coupes inclinées (10, 12) au niveau de la pointe (7) et dans le profil des filets des sections filetées (4, 5, 6), respectivement.

11. Implant dentaire selon l'une quelconque des revendications précédentes, **caractérisé en ce que** la pointe (7) a un diamètre compris entre 1 et 3 millimètres.
